# EUROPÄISCHE PATENTANMELDUNG

(11) **EP 3 514 781 A1**
(43) Veröffentlichungstag der Anmeldung: **24.07.2019**
(21) Anmeldenummer: 19151071.8
(22) Anmeldetag: 10.01.2019
(51) Int. Cl.: G08G 1/16, G01S 5/18

(54) **FAHRZEUGSYSTEM ZUM IDENTIFIZIEREN UND LOKALISIEREN VON NICHT-AUTOMOBILEN VERKEHRSTEILNEHMERN MITTELS GERÄUSCHEN**

(30) Priorität: 19.01.2018 DE 102018200876
(71) Anmelder: ZF Friedrichshafen AG, 88046 Friedrichshafen (DE)
(72) Erfinder: Hanson, Lucas, Belle Harbor, NY 11694 (DE); Fieres, Julian, 97422 Schweinfurt (DE); Ade, Florian, 88085 Langenargen (DE); Petrich, Anja, 88079 Kressbronn-Gohren (DE); Lovison, Debora, 88046 Friedrichshafen (DE)

(57) **Zusammenfassung**

Trainingssystem (10) für ein Straßenfahrzeug (1) zum Erfassen von nicht-automobilen Verkehrsteilnehmern (2) anhand von Geräuschen aufweisend eine Eingangsschnittstelle (11), um Soll-Trainingsdaten (12) zu erhalten, wobei die Soll-Trainingsdaten (12) während einer Fahrt des Straßenfahrzeuges (1) aufgenommene Geräuschaufnahmen (17) der nicht-automobilen Verkehrsteilnehmer (2) wenigstens eines an dem Straßenfahrzeug (1) anordenbaren Mikrofons (3a, 3b, 3c, 3d) und jeweils zugehörige Soll-Kennzeichen (18a) dieser nicht-automobilen Verkehrsteilnehmer (2) sind, und wobei das Trainingssystem (10) ausgeführt ist, ein künstliches neuronales Netzwerk (13) mit den Soll-Trainingsdaten (12) vorwärts zu speisen und in der Vorwärtsspeisung ein mit dem künstlichen neuronalen Netzwerk (13) ermitteltes Ist-Kennzeichen (18b) des jeweiligen nicht-automobilen Verkehrsteilnehmers (2) zu erhalten, und Gewichtungsfaktoren (14) für Verbindungen (15) von Neuronen (16) des künstlichen neuronalen Netzwerks (13) durch Rückwärtsspeisen des künstlichen neuronalen Netzwerks (13) mit dem Fehler (19) zwischen dem ermitteltem Ist-Kennzeichen (18b) und zugehörigem Soll-Kennzeichen (18a) zu erhalten. Ferner betrifft die Erfindung ein entsprechendes Trainingsverfahren, eine Auswerteeinrichtung, ein Einsatzsystem, eine Verwendung eines erfindungsgemäßen Einsatzsystems und ein Einsatzverfahren.

## Beschreibung

Gegenstand der Erfindung ist das Erfassen von nicht-automobilen Verkehrsteilnehmern anhand von typischen Geräuschen der nicht-automobilen Verkehrsteilnehmer mittels eines künstlichen neuronalen Netzwerks.

Im Einzelnen betrifft die Erfindung ein Trainingssystem für ein Straßenfahrzeug zum Erfassen von nicht-automobilen Verkehrsteilnehmern anhand von Geräuschen nach Anspruch 1. Ferner betrifft die Erfindung ein Trainingsverfahren für ein künstliches neuronales Netzwerk zum Erfassen von nicht-automobilen Verkehrsteilnehmern anhand von Geräuschen nach Anspruch 2. Des Weiteren betrifft die Erfindung eine Auswerteeinrichtung für ein Straßenfahrzeug zum Erfassen von nicht-automobilen Verkehrsteilnehmern anhand von Geräuschen nach Anspruch 4. Außerdem betrifft die Erfindung ein Einsatzsystem für ein Straßenfahrzeug zum Erfassen von nicht-automobilen Verkehrsteilnehmern anhand von Geräuschen nach Anspruch 8. Zusätzlich betrifft die Erfindung eine Verwendung eines erfindungsgemäßen Einsatzsystems als ein Fahrerassistenzsystem nach Anspruch 10. Schließlich betrifft die Erfindung ein Einsatzverfahren zum Erfassen von nicht-automobilen Verkehrsteilnehmern anhand von Geräuschen nach Anspruch 11.

Bekannte Radar-, Lidar- und Bildsensoren von Fahrerassistenzsystemen erfassen Objekte in einem sichtbaren Umfeld eines Fahrzeuges mittels entsprechenden elektromagnetischen Wellen. Wenn aber ein Hindernis für diese Wellen zwischen einem derartigen Sensor und dem Objekt angeordnet ist, kann das Objekt mit diesen Sensoren nicht erfasst werden.

Die DE 10 2012 218 482 A1 offenbart ein Fahrerassistenzsystem, das Umgebungsgeräusche, die von außen auf das Fahrzeug treffen, erfasst.

Hier setzt die Erfindung an. Der Erfindung hat die Aufgabe zu Grunde gelegen, ein Erfassen von nicht-automobilen Verkehrsteilnehmern mittels Geräuschen bereitzustellen.

Diese Aufgabe wird gelöst mit
- einem Trainingssystem für ein Straßenfahrzeug zum Erfassen von nicht-automobilen Verkehrsteilnehmern anhand von Geräuschen mit den Merkmalen des Anspruchs 1,
- einem Trainingsverfahren für ein künstliches neuronales Netzwerk zum Erfassen von nicht-automobilen Verkehrsteilnehmern anhand von Geräuschen mit den Merkmalen des Anspruchs 2,
- einer Auswerteeinrichtung für ein Straßenfahrzeug zum Erfassen von nicht-automobilen Verkehrsteilnehmern anhand von Geräuschen mit den Merkmalen des Anspruchs 4,
- einem Einsatzsystem für ein Straßenfahrzeug zum Erfassen von nicht-automobilen Verkehrsteilnehmern anhand von Geräuschen mit den Merkmalen des Anspruchs 8,
- einer Verwendung eines erfindungsgemäßen Einsatzsystems als ein Fahrerassistenzsystem gemäß Anspruch 10 und
- einem Einsatzverfahren zum Erfassen von nicht-automobilen Verkehrsteilnehmern anhand von Geräuschen mit den Merkmalen des Anspruchs 11.

Weiterbildungen und vorteilhafte Ausgestaltungen sind in den Unteransprüchen angegeben.

Das erfindungsgemäße Trainingssystem für ein Straßenfahrzeug zum Erfassen von nicht-automobilen Verkehrsteilnehmern anhand von Geräuschen weist eine Eingangsschnittstelle auf, um Soll-Trainingsdaten zu erhalten. Die Soll-Trainingsdaten sind während einer Fahrt des Straßenfahrzeuges aufgenommene Geräuschaufnahmen der nicht-automobilen Verkehrsteilnehmer wenigstens eines an dem Straßenfahrzeug anordenbaren Mikrofons und jeweils zugehörige Soll-Kennzeichen dieser nicht-automobilen Verkehrsteilnehmer. Das Trainingssystem ist ausgeführt, ein künstliches neuronales Netzwerk mit den Soll-Trainingsdaten vorwärts zu speisen. In der Vorwärtsspeisung wird ein mit dem künstlichen neuronalen Netzwerk ermitteltes Ist-Kennzeichen des jeweiligen nicht-automobilen Verkehrsteilnehmers erhalten. Gewichtungsfaktoren für Verbindungen von Neuronen des künstlichen neuronalen Netzwerks werden durch Rückwärtsspeisen des künstlichen neuronalen Netzwerks mit dem Fehler zwischen dem ermitteltem Ist-Kennzeichen und zugehörigem Soll-Kennzeichen zu erhalten.

Die nachfolgenden Definitionen gelten für den gesamten Gegenstand der Erfindung.

Nicht-automobile Verkehrsteilnehmer sind Verkehrsteilnehmer, die am Verkehr außerhalb eines Automobils, das heißt einem Personenkraftwagen oder Lastkraftwagen, teilnehmen. Diese Verkehrsteilnehmer sind im Vergleich zu automobilen Verkehrsteilnehmern, die durch aktive und passive Sicherheitssysteme des Automobils, beispielsweise Bremsen, Gurtstraffer und/oder Airbag Systeme vor im Verkehr auftretenden Gefahren geschützt sind, gefährdet. Im Sinne dieser Definition zählen auch Motorradfahrer zu automobilen Verkehrsteilnehmern. Gefährdete Verkehrsteilnehmer sind insbesondere Fußgänger, Fahrer von muskelkraftbetriebenen und mit Motor angetriebenen Fahrrädern, Kinder und/oder Tiere.

Geräusche sind wahrnehmbare Schallereignisse durch Menschen und/oder Sensoren, zum Beispiel Schallwandlern, insbesondere Mikrofone. Geräusche von nicht-automobilen, also gefährdeten, Verkehrsteilnehmern sind zum Beispiel Fahrradklingeln, Hunde Bellen, oder Kinderlaute.

Straßenfahrzeuge sind Landfahrzeuge, die ihre Fahrtrichtung mittels Haftreibung auf einer befahrbaren Unterlage beibehalten oder ändern können. Insbesondere mit Motor betriebene Fahrzeuge, das heißt Kraftfahrzeuge, wie zum Beispiel Automobil oder Motorräder, sind Straßenfahrzeuge. Im Fokus der Erfindung liegen zivile Straßenfahrzeuge.

Eine Schnittstelle ist eine Einrichtung zwischen wenigstens zwei Funktionseinheiten, an der ein Austausch von logischen Größen, z.B. Daten oder physikalischen Größen, z.B. elektrischen Signalen, erfolgt, entweder nur unidirektional oder bidirektional. Der Austausch kann analog oder digital erfolgen. Der Austausch kann drahtlos oder drahtgebunden erfolgen. Eine Schnittstelle kann zwischen Software und Software, Hardware und Hardware sowie Software und Hardware und Hardware und Software bestehen.

Die an das Straßenfahrzeug anordenbare Mikrofone sind Mikrofone, die für automobile Anwendungen geeignet sind, das heißt insbesondere entsprechend witterungsbeständig und funktionssicher sind. Vorzugweise weisen diese Mikrofone Filter und/oder Verstärker auf, um für Geräusche der nicht-automobilen Verkehrsteilnehmer sensitiver zu sein als für Geräusche von automobilen Verkehrsteilnehmern. Beispielsweise werden Motorengeräusche und/oder Bremsgeräusche von Automobilen aus den übrigen Geräuschen herausgefiltert. Vorzugsweise sind an jeder Seite des Straßenfahrzeuges, also vorne, hinten, links und rechts, jeweils wenigstens ein Mikrofon angeordnet, das heißt eine bestimmte Anordnung von Mikrofonen. Vorzugsweise sind die jeweiligen Mikrofone Richtmikrofone.

Soll-Trainingsdaten sind positive Trainingsdaten, mit dem ein lernender Mechanismus, beispielsweise ein künstliches neuronales Netzwerk, wahre Informationen lernt. Soll-Trainingsdaten sind mit der Bedeutung der Information gelabelt, das heißt gekennzeichnet, damit der lernende Mechanismus eine Information semantisch erfassen kann. Z. B. zeigen Kinder im Kleinkindalter ein hinsichtlich Stärke und Intonation charakteristisches Schreiverhalten, das auch im Verkehr auftreten kann. Ein derartiges Schreien ist ein Soll-Geräusch, allgemein eine Soll-Information, für Kleinkinder. Dieses Soll-Geräusch ist die Eingangs-Information für den lernenden Mechanismus. Die Stärke und Intonation dieses Schreiens wird mit einem Mikrofon aufgenommen. Diese Geräuschaufnahme wird dann mit dem Soll-Kennzeichen Kleinkind markiert. Ein weiteres Soll-Geräusch ist das Klingeln einer Fahrradklingel. Dieses Klingeln wird mit dem Soll-Kennzeichen Fahrradfahrer markiert. Alternativ zu während der Fahrt des Straßenfahrzeuges aufgenommenen Geräuschaufnahmen sind die Soll-Trainingsdaten simulierte, z.B. mit einem Computer simulierte, Geräusche.

Es liegt auch im Rahmen der Erfindung, dass das Trainingssystem eine zweite Eingangsschnittstelle aufweist, um Fehler-Trainingsdaten zu erhalten. Fehler-Trainingsdaten sind negative Trainingsdaten, durch die der lernende Mechanismus lernt, auf einen Fehler zu reagieren.

Ein Ist-Kennzeichen ist das Kennzeichen, das der lernende Mechanismus nach Verarbeitung der Soll-Information erhält, das heißt als Ausgang ausgibt. Zu Beginn der Trainingsphase ist das erhaltene Ist-Kennzeichen in der Regel verschieden von dem eingegebenen Soll-Kennzeichen. In der Trainingsphase wird der Fehler zwischen Ist- und Soll-Kennzeichen minimiert, in der Regel nach der Methode der kleinsten Quadrate. Nach der Trainingsphase hat der lernende Mechanismus, beispielsweise das künstliche neuronale Netzwerk, den Lernprozess abgeschlossen und ist trainiert. Bei einem trainierten künstlichen neuronalen Netzwerk sind die erhaltenen Ist-Kennzeichen annähernd gleich den Soll-Kennzeichen. Das Kennzeichen kann auch ein Bild sein.

Ein künstliches neuronales Netzwerk ist ein Algorithmus, der auf einer elektronischen Schaltung ausgeführt wird und am Vorbild des neuronalen Netzwerks des menschlichen Gehirns programmiert ist. Funktionseinheiten eines künstlichen neuronalen Netzwerks sind künstliche Neuronen, deren Output sich im Allgemeinen als Wert einer Aktivierungsfunktion ausgewertet über eine gewichtete Summe der Inputs plus einem systematischen Fehler, dem sogenannten Bias, ergibt. Durch Testen von mehreren vorbestimmten Inputs mit verschiedenen Gewichtungsfaktoren und/oder Aktivierungsfunktionen werden künstliche neuronale Netzwerke, ähnlich dem menschlichen Gehirn, trainiert. Das Trainieren eines künstlichen neuronalen Netzwerks mit Hilfe von vorbestimmten Inputs, das heißt Soll-Trainingsdaten, wird maschinelles Lernen genannt. Eine Teilmenge des maschinellen Lernens ist das tiefgehende Lernen, das sogenannte Deep Learning, bei dem eine Reihe hierarchischer Schichten von Neuronen, sogenannten Hidden Layers, genutzt wird, um den Prozess des maschinellen Lernens durchzuführen. Ein künstliches neuronales Netzwerk mit mehreren Hidden Layers ist ein Deep Neural Network. Ein trainiertes künstliches neuronales Netzwerk zeichnet sich durch zweckgerichtetes Reagieren auf neue Informationen aus. Beispiele künstlicher neuronaler Netzwerke sind Perzeptrons, konvolutionale oder rekurrente neuronale Netzwerke. Mit Gewichtungsfaktoren werden Verbindungen zwischen Neuronen bewertet. Vorwärtsspeisen, im Englischen als forward propagation bezeichnet, bedeutet, dass eine Information in die Eingangsschicht des künstlichen neuronalen Netzwerks eingespeist wird, die folgenden Schichten durchläuft und in der Ausgabeschicht ausgegeben wird. Rückwärtsspeisen, im Englischen als backward propagation bezeichnet, bedeutet, dass eine Information in die Ausgabeschicht eingegeben wird und in der Eingangsschicht ausgegeben wird. Durch sukzessives Rückwärtsspeisen des Fehlers aus der Ausgabeschicht in die jeweils vorherige Schicht bis hin zur Eingangsschicht werden die Fehler der jeweiligen Schichten erhalten. Die Fehler sind eine Funktion der Gewichtungsfaktoren. Durch Minimierung des Fehlers in der Trainingsphase werden damit die Gewichtungsfaktoren geändert. Dadurch wird bei erneutem Einspeisen Eingabe eine Annäherung an die gewünschte Ausgabe erreicht. Die Rückwärtsspeisung ist ausführlich in Michael A. Nielsen, Neural Networks and Deep Learning, Determination Press, 2015, beschrieben.

Da sich die Frequenz der Kinderstimme von der Frequenz der Erwachsenenstimme unterscheidet, liegt es auch im Rahmen der Erfindung, das künstliche neuronale Netzwerk zu trainieren, in Abhängigkeit der aufgenommenen Frequenz eine Klassifizierung der nicht-automobilen Verkehrsteilnehmer in Kinder und Erwachsene zu erhalten.

Mit dem Gegenstand der Erfindung können auch mehrere Kindergeräusche voneinander unterschieden werden. Da Kinder auf Straßen oftmals mit Bällen spielen, ist ein Beispiel für ein typisches Kindergeräusch Auf-/Abprall Geräusche von Bällen. Kinder können auch in Kombination mit derartigen typischen Kindergeräuschen klassifiziert werden.

Das erfindungsgemäße Trainingsverfahren für ein künstliches neuronales Netzwerk zum Erfassen von nicht-automobilen Verkehrsteilnehmern anhand von Geräuschen weist die folgenden Verfahrensschritte auf:
- Bereitstellen von während einer Fahrt mit einem Straßenfahrzeug aufgenommen Geräuschaufnahmen der nicht-automobilen Verkehrsteilnehmer wenigstens eines an dem Straßenfahrzeug anordenbaren Mikrofons und jeweils zugehörige Soll-Kennzeichen der nicht-automobilen Verkehrsteilnehmer als Soll-Trainingsdaten,
- Vorwärtsspeisen des künstlichen neuronalen Netzwerks mit den Soll-Trainingsdaten,
- Erhalten eines mit dem künstlichen neuronalen Netzwerk ermittelten Ist-Kennzeichens des jeweiligen nicht-automobilen Verkehrsteilnehmers,
- Rückwärtsspeisen des künstlichen neuronalen Netzwerks mit dem Fehler zwischen dem ermitteltem Ist-Kennzeichen und zugehörigem Soll-Kennzeichen, und
- Erhalten von Gewichtungsfaktoren für Verbindungen von Neuronen des künstlichen neuronalen Netzwerks in einer Rückwärtsspeisung.

Mit dem Trainingssystem und dem Trainingsverfahren wird damit ein Training für ein künstliches neuronales Netzwerk bereitgestellt, um zu lernen, nicht-automobile Verkehrsteilnehmer anhand derer Geräusche zu erfassen.

Vorzugsweise sind die die Soll-Trainingsdaten Geräuschaufnahmen von Fußgängern, Spielenden, vorzugsweise Kindern, Sportlern, vorzugsweise Fahrradfahrern, Inline-Skatern, Rollschuhfahrern und/oder Joggern, Rollern, Rollstuhlfahrern, Haustieren, vorzugsweise Hunde, und/oder Stalltieren, vorzugsweise Pferde. Damit lernt das künstliche neuronale Netzwerk verschiedene nicht-automobile Verkehrsteilnehmer anhand derer spezifischer Geräusche zu erfassen. Alternativ sind die Soll-Trainingsdaten simulierte, z.B. mit einem Computer simulierte, Geräusche von Fußgängern, Spielenden, vorzugsweise Kindern, Sportlern, vorzugsweise Fahrradfahrern, Inline-Skatern, Rollschuhfahrern und/oder Joggern, Rollern, Rollstuhlfahrern, Haustieren, vorzugsweise Hunde, und/oder Stalltieren, vorzugsweise Pferde.

Es liegt auch im Rahmen der Erfindung, dass das Trainingssystem und/oder das Trainingsverfahren in unterschiedlichen Orten und/oder Ländern und bei unterschiedlichen Wetterbedingungen eingesetzt bzw. durchgeführt werden. Damit lernt das künstliche neuronale Netzwerk Geräusche zu unterschiedlichen Bedingungen und kann dadurch spezifischer nicht-automobile Verkehrsteilnehmer anhand derer Geräusche, unabhängig von äußeren Einflüssen, erfassen.

Die erfindungsgemäße Auswerteeinrichtung für ein Straßenfahrzeug zum Erfassen von nicht-automobilen Verkehrsteilnehmern anhand von Geräuschen weist eine Eingangsschnittstelle auf, um die Geräusche der nicht-automobilen Verkehrsteilnehmer zu erhalten. Die Auswerteeinrichtung ist ausgeführt, ein trainiertes künstliches neuronales Netzwerk mit diesen Geräuschen vorwärts zu speisen. Das künstliche neuronale Netzwerk ist trainiert, anhand der Geräusche Kennzeichen der nicht-automobilen Verkehrsteilnehmer zu erhalten. Außerdem weist die Auswerteeinrichtung eine Ausgangsschnittstelle auf, um die Kennzeichen der nicht-automobilen Verkehrsteilnehmer auszugeben. Straßenfahrzeuge, die nach Herstellung noch keine Auswerteeinrichtung aufweisen, lassen sich mit dieser einfach nachrüsten.

Die Ausgangsschnittstelle ist vorteilhafterweise eine Mensch-Maschinen-Schnittstelle, im Englischen als human machine interface bezeichnet, die beispielsweise in ein Infotainment System des Straßenfahrzeuges integrierbar ist. Die Ausgabe des Kennzeichens erfolgt optisch, z.B. durch symbolhaftes Anzeigen des erfassten nicht-automobilen Verkehrsteilnehmers in einer Anzeige, haptisch, z.B. durch Vibration eines Lenkrades, oder allgemein elektronisch.

Die Auswerteeinrichtung ist für nicht-automatisiert und automatisiert betreibbare Straßenfahrzeuge vorgesehen. Bei nicht-automatisiert betreibbaren Straßenfahrzeugen unterstützt die Auswerteeinrichtung den menschlichen Fahrer, nicht-automobile Verkehrsteilnehmer wahrzunehmen. Bei automatisiert betreibbaren Straßenfahrzeugen unterstützt die Auswerteeinrichtung das Gesamtsystem Straßenfahrzeug in der Erfassung nicht-automobiler Verkehrsteilnehmer.

Vorzugsweise ist das künstliche neuronale Netzwerk gemäß dem erfindungsgemäßen Trainingsverfahren trainiert.

Bevorzugt ist das künstliche neuronale Netzwerk trainiert, anhand der Geräusche Positionen und/oder Bewegungsrichtungen der nicht-automobilen Verkehrsteilnehmer relativ zu der Auswerteeinrichtung zu erhalten. Anhand der Position und/oder der Bewegungsrichtung eines nicht-automobilen Verkehrsteilnehmers relativ zu der Auswerteeinrichtung ist ein Zusammenstoß des Straßenfahrzeuges mit diesem nicht-automobilen Verkehrsteilnehmer vorhersehbar und ggf. vermeidbar. Die Position erhält das künstliche neuronale Netzwerk beispielsweise aus jeweiligen Signalen von um das Straßenfahrzeug herum angeordneten Richtmikrofonen. Die Bewegungsrichtung erhält das künstliche neuronale Netzwerk z.B. aus einer Dopplerverschiebung der Frequenz des eingehenden Geräusches.

Mit dem erfindungsgemäßen Trainingssystem und Trainingsverfahren wird das künstliche neuronale Netzwerk trainiert, Positionen und/oder Bewegungsrichtungen der nicht-automobilen Verkehrsteilnehmer zu erhalten.

Gemäß einer Weiterbildung der Erfindung ist das künstliche neuronale Netzwerk trainiert, anhand der Kennzeichen, Position und/oder Bewegungsrichtung des nicht-automobilen Verkehrsteilnehmers einen Fahrzeugsteuerungsbefehl zu bestimmen, um einen drohenden Zusammenstoß mit zumindest einem der nicht-automobilen Verkehrsteilnehmern zu vermeiden. Die Ausgangsschnittstelle ist ausgeführt, diesen Fahrzeugsteuerungsbefehl an eine Fahrzeugregelungseinrichtung auszugeben. Bewegt sich z.B. ein Fahrradfahrer relativ zur Auswerteeinrichtung auf diese zu, bestimmt das künstliche neuronale Netzwerk als Fahrzeugsteuerungsbefehl einen Bremsvorgang. Diesen Fahrzeugsteuerungsbefehl gibt die Ausgangsschnittstelle an Bremsaktuatoren des Straßenfahrzeuges aus. Als Ergebnis bremst das Straßenfahrzeug ab. Es kommt zu keinem Zusammenstoß mit dem Fahrradfahrer. Dies ist insbesondere dann von Vorteil, wenn sich das Straßenfahrzeug auf eine Straßenecke zubewegt und der Fahrradfahrer von einem für das Straßenfahrzeug nicht einsehbaren Bereich der Ecke sich auf das Straßenfahrzeug zubewegt. Für bekannte Umfelderfassungssensoren von Fahrerassistenzsystemen, beispielsweise Radar, Lidar oder Kamera, ist dieser Fahrradfahrer nicht erfassbar. Wenn aber der Fahrradfahrer kurz vor der Ecke eine Fahrradklingel betätigt, kann die Auswerteeinrichtung das Geräusch der Klingel verarbeiten. Das künstliche neuronale Netzwerk bestimmt dann in Abhängigkeit der Position und der Bewegungsrichtung des Fahrradfahrers relativ zu der Auswerteeinrichtung einen entsprechenden Fahrzeugsteuerungsbefehl, um einen Zusammenstoß zu vermeiden. Damit wird durch die Auswerteeinrichtung die Sicherheit von gefährdeten Verkehrsteilnehmern verbessert.

Das erfindungsgemäße Einsatzsystem für ein Straßenfahrzeug zum Erfassen von nicht-automobilen Verkehrsteilnehmern anhand von Geräuschen weist wenigstens ein an dem Straßenfahrzeug anordenbares Mikrofon auf. Mit diesem Mikrofon werden während einer Fahrt mit dem Straßenfahrzeug Geräuschaufnahmen der nicht-automobilen Verkehrsteilnehmer erhalten. Das Einsatzsystem weist ferner eine in das Straßenfahrzeug integrierbare Auswerteeinrichtung auf. Die Auswerteeinrichtung ist ausgeführt, als Eingang die Geräuschaufnahmen des Mikrofons zu erhalten. Außerdem ist die Auswerteeinrichtung ausgeführt, ein trainiertes künstliches neuronales Netzwerk mit diesen Geräuschen vorwärts zu speisen. Das künstliche neuronale Netzwerk ist trainiert, anhand der Geräusche wenigstens ein Kennzeichen der nicht-automobilen Verkehrsteilnehmer zu erhalten. Des Weiteren ist die Auswerteeinrichtung ausgeführt, als Ausgang das wenigstens eine Kennzeichen der nicht-automobilen Verkehrsteilnehmer bereitzustellen.

Im Gegensatz zu dem erfindungsgemäßen Trainingssystem weist das erfindungsgemäße Einsatzsystem ein bereits trainiertes künstliches neuronales Netzwerk auf und stellt als Ausgang das wenigstens eine Kennzeichen bereit. Bei dem Einsatzsystem handelt es sich um ein System mit den Einzelbestandteilen Mikrofon und Auswerteeinrichtung, die durch eine zielgerichtete Verwendung in funktioneller Einheit stehen.

Vorzugsweise ist die Auswerteeinrichtung eine erfindungsgemäße Auswerteeinrichtung.

Gegenstand der Erfindung ist auch eine Verwendung des erfindungsgemäßen Einsatzsystems als ein Fahrerassistenzsystem. Das Fahrerassistenzsystem kein ein rein assistierendes oder ein vollautomatisiertes Fahrerassistenzsystem sein.

Das erfindungsgemäße Einsatzverfahren zum Erfassen von nicht-automobilen Verkehrsteilnehmern anhand von Geräuschen weist die folgenden Verfahrensschritte auf:
- Erhalten der Geräusche der nicht-automobilen Verkehrsteilnehmer,
- Ausführen eines trainierten künstlichen neuronalen Netzwerks,
   - wobei das trainierte künstliche neuronale Netzwerk mit diesen Geräuschen vorwärts gespeist wird und
   - als Ausgang wenigstens ein Kennzeichen der nicht-automobilen Verkehrsteilnehmer erhält,
      und
- Ausgeben des wenigstens einen Kennzeichens der nicht-automobilen Verkehrsteilnehmer.

Im Gegensatz zu dem erfindungsgemäßen Trainingsverfahren weist das erfindungsgemäße Einsatzverfahren ein bereits trainiertes künstliches neuronales Netzwerk auf und stellt als Ausgang das wenigstens eine Kennzeichen bereit.

Vorteilhafterweise wird zur Durchführung des Einsatzverfahrens eine erfindungsgemäße Auswerteeinrichtung oder ein erfindungsgemäßes Einsatzsystem verwendet.

In einer Weiterbildung der Erfindung wird in dem Einsatzverfahren anhand der Kennzeichen, einer Position und/oder einer Bewegungsrichtung des nicht-automobilen Verkehrsteilnehmers ein Fahrzeugsteuerungsbefehl bestimmt, um einen drohenden Zusammenstoß mit zumindest einem der nicht-automobilen Verkehrsteilnehmer zu vermeiden. Dieser Fahrzeugsteuerungsbefehl wird an eine Fahrzeugregelungseinrichtung ausgegeben. Damit stellt die Erfindung auch ein Verfahren bereit, Zusammenstöße mit gefährdeten Verkehrsteilnehmern zu vermeiden.

Erfindungsgemäß ist auch ein Computerprogrammprodukt, das ausgeführt ist, in einen Speicher eines Computers geladen zu werden. Das Computerprogrammprodukt weist Softwarecodeabschnitte auf, mit denen die Schritte des erfindungsgemäßen Trainingsverfahrens und/oder Einsatzverfahrens ausgeführt werden, wenn das Computerprogramm auf dem Computer läuft.

Computerprogrammprodukte umfassen in der Regel eine Folge von Befehlen, durch die die Hardware bei geladenem Programm veranlasst wird, ein bestimmtes Verfahren durchzuführen, das zu einem bestimmten technischen Ergebnis führt. Wenn das betreffende Programm auf einem Computer zum Einsatz kommt, ruft das Computerprogrammprodukt einen technischen Effekt hervor, nämlich das Erkennen von Geräuschen.

Ein Speicher ist ein Medium für die Sicherung von Daten.

Software ist ein Sammelbegriff für Programme und zugehörigen Daten. Das Komplement zu Software ist Hardware. Hardware bezeichnet die mechanische und elektronische Ausrichtung eines Daten verarbeitenden Systems.

Die Erfindung hat u.a. den Vorteil, dass gefährdete Verkehrsteilnehmer auch bei schlechter Sicht von einem Fahrerassistenzsystem erkannt werden können, nämlich durch ihre Geräusche. Damit kann ein Zusammenstoß zwischen einem Straßenfahrzeug und einem gefährdeten Verkehrsteilnehmer vermieden werden, auch dann, wenn der gefährdete Verkehrsteilnehmer von dem Führer des Straßenfahrzeuges oder, im Falle eines automatisiert fahrenden Straßenfahrzeuges, von dem Straßenfahrzeug selbst nicht visuell erkennbar ist.

Die Erfindung wird in den nachfolgenden Figuren ausführlich beschrieben. Es zeigen:
- Fig. 1: ein Ausführungsbeispiel einer Auswerteeinrichtung, integriert in ein Straßenfahrzeug,
- Fig. 2: ein Ausführungsbeispiel eines Trainingssystems,
- Fig. 3: eine schematische beispielhafte Darstellung eines Trainingsverfahrens,
- Fig. 4: ein Ausführungsbeispiel eines Einsatzsystems und
- Fig. 5: eine schematische beispielhafte Darstellung eines Einsatzverfahrens.

In den Figuren bezeichnen, sofern nicht anders angegeben, gleiche Bezugszeichen gleiche oder funktionsähnliche Bezugsteile. In den jeweiligen Figuren sind die jeweils relevanten Bezugsteile beziffert.

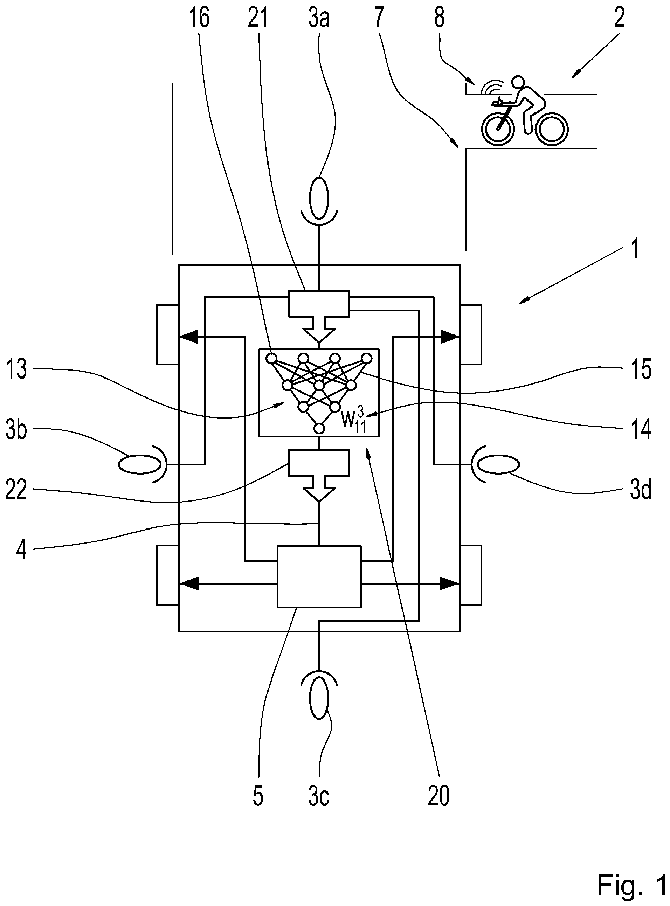

Fig. 1 zeigt als ein Straßenfahrzeug 1 einen Personenkraftwagen. In einem Frontbereich des Straßenfahrzeuges 1 ist als ein Mikrofon 3a ein erstes Richtmikrofon, ausgerichtet in Fahrtrichtung, angeordnet. In einem ersten Seitenbereich des Straßenfahrzeuges 1 ist als ein Mikrofon 3b ein zweites Richtmikrofon, ausgerichtet in Richtung der ersten Seite, angeordnet. In einem zweiten Seitenbereich des Straßenfahrzeuges 1 ist als ein Mikrofon 3d ein drittes Richtmikrofon, ausgerichtet in Richtung der zweiten Seite, angeordnet. In einem Heckbereich des Straßenfahrzeuges 1 ist als ein Mikrofon 3c ein viertes Richtmikrofon, ausgerichtet entgegen dem ersten Richtmikrofon, angeordnet. Die Mikrofone erfassen Geräusche von nicht-automobilen, das heißt gefährdeten, Verkehrsteilnehmern 2.

Ein nicht-automobiler Verkehrsteilnehmer 2 in Fig. 1 ist ein Fahrradfahrer, der sich relativ zu dem Straßenfahrzeug 1 hinter einer Straßenecke 7 befindet und von visuellen Umfelderfassungssensoren wie beispielsweise Radar, Lidar und/oder Bildsensor nicht erfassbar ist. Die Bewegungsrichtung des Fahrradfahrers ist senkrecht zu der Bewegungsrichtung des Straßenfahrzeuges. Bei Beibehaltung der Bewegungen kommt es an der Straßenecke 7 zu einem Zusammenstoß zwischen dem Straßenfahrzeug 1 und dem nicht-automobilen Verkehrsteilnehmer.

Ein derartiger Zusammenstoß wird mit einer erfindungsgemäßen Auswerteeinrichtung 20 folgendermaßen vermieden. Der nicht-automobile Verkehrsteilnehmer 2 betätigt eine Fahrradklingel 8. Das spezifische Geräusch der Fahrradklingel 8 wird von dem Mikrofon 3a als Geräuschaufnahme 17 aufgenommen. Über eine Eingangsschnittstelle 21, an deren Eingang die Ausgänge der Mikrofone 3a, 3b, 3c und 3d anliegen, wird die Geräuschaufnahme in ein künstliches neuronales Netzwerk 13 vorwärts gespeist. Das künstliche neuronale Netzwerk 16 weist eine fully connected Architektur auf, das heißt jedes Neuron 16 einer Schicht ist über Verbindungen 15 mit jedem Neuron 16 der nächstfolgenden Schicht verbunden. Das künstliche neuronale Netzwerk 13 hat vier Schichten, nämlich eine Eingangsschicht mit vier Neuronen 16, eine erste Zwischenschicht mit drei Neuronen 16, eine zweite Zwischenschicht mit zwei Neuronen 16 und eine Ausgangsschicht mit einem Neuron 16. Gewichtungsfaktoren 14 des künstlichen neuronalen Netzwerks 13 sind über Fehlerminimierung eingestellt, das heißt das künstliche neuronale Netzwerk 13 ist trainiert. Der Gewichtungsfaktor w³₁₁ bewertet die Verbindung 15 zwischen dem ersten Neuron 16 der dritten Schicht und dem ersten Neuron 16 davorliegenden, also der zweiten, das heißt drei minus 1, Schicht.

Während einer Trainingsphase hat das künstliche neuronale Netzwerk gelernt, in Abhängigkeit der Geräuschaufnahme 17 Position und Bewegungsrichtung des nicht-automobilen Verkehrsteilnehmers 2 relativ zu der Auswerteeinrichtung 20 zu erhalten. In Abhängigkeit der erhaltenen Position und Bewegungsrichtung bestimmt das künstliche neuronale Netzwerk 13 einen Fahrzeugsteuerungsbefehl 4. Der Fahrzeugsteuerungsbefehl 4 wird über eine Ausgangsschnittstelle 22 an eine Fahrzeugregelungseinrichtung 5 ausgegeben. Die Fahrzeugregelungseinrichtung 5 regelt in Abhängigkeit des Fahrzeugsteuerungsbefehls 4 die Längs- und Quersteuerung des Straßenfahrzeuges 1, um einen Zusammenstoß mit dem Verkehrsteilnehmer zu vermeiden.

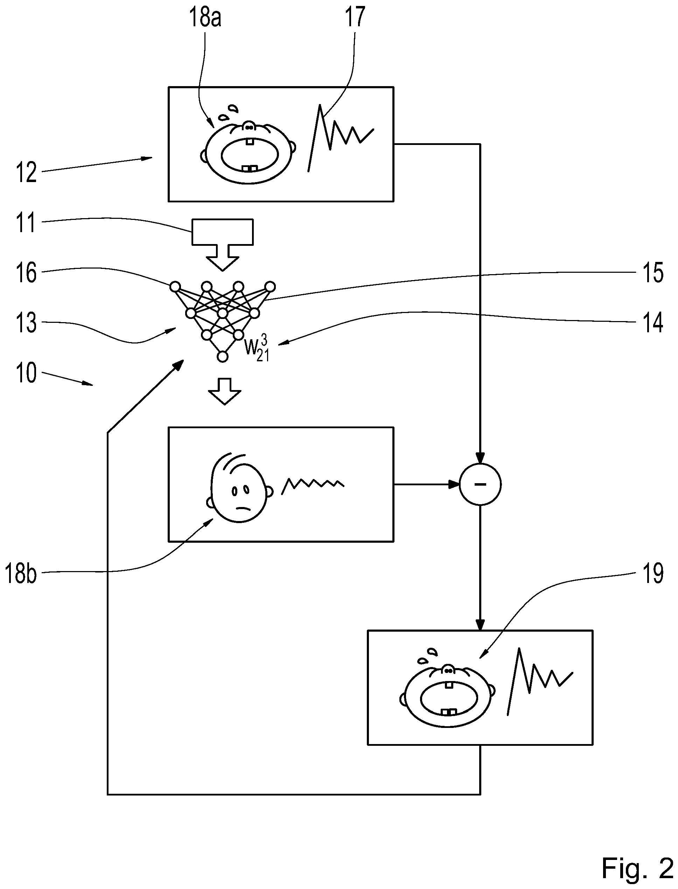

Das künstliche neuronale Netzwerk 13 wird in der Trainingsphase mit einem in Fig. 2 dargestelltem Trainingssystem 10 trainiert. Über eine Eingangsschnittstelle 11 erhält das künstliche neuronale Netzwerk 13 Soll-Trainingsdaten 12. Die Soll-Trainingsdaten sind Geräuschaufnahmen 17 von einem Schrei eines Kindes. Das schreiende Kind ist für diese Geräuschaufnahme 17 ein Soll-Kennzeichen 18a. Das Soll-Kennzeichen 18a ist zwar als Symbol gezeigt, kann aber letztlich ein einfaches Zahlenlabel sein, mit dem das künstliche neuronale Netzwerk 13 weiß, dass diese Geräuschaufnahme 17 eine Geräuschaufnahme eines schreienden Kindes ist. Das künstliche neuronale Netzwerk 13 wird mit den Soll-Trainingsdaten 12 vorwärts gespeist. In der Vorwärtsspeisung erhält das künstliche neuronale Netzwerk 13 als ermitteltes Ist-Kennzeichen 18b ein trauriges Kind, das nicht oder weniger schreit als das schreiende Kind. Das Ist-Kennzeichen 18b ist vereinfacht als Symbol dargestellt. Mittels Subtraktion wird ein Fehler 19 zwischen dem Ist-Kennzeichen 18b und dem Soll-Kennzeichen 18a gebildet. Der Fehler 19 wird rückwärts in das künstliche neuronale Netzwerk eingespeist, um über Rückwärtspropagation die Gewichtungsfaktoren 14 einzustellen, damit bei nochmaliger Eingabe eines Kindesschrei das künstliche neuronale Netzwerk als Ist-Kennzeichen 18b auch ein schreiendes Kind erhält. Dies wird als Lernen oder Trainieren bezeichnet.

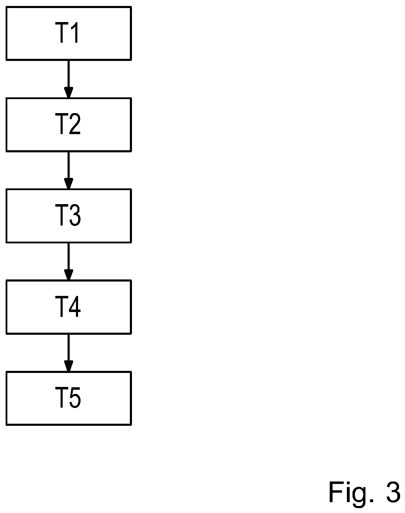

Das Trainingsverfahren ist in Fig. 3 gezeigt. In dem Verfahrensschritt T1 werden während einer Fahrt mit dem Straßenfahrzeug 1 aufgenommen Geräuschaufnahmen 17 des nicht-automobilen Verkehrsteilnehmers 2 wenigstens eines Mikrofon 3a, 3b, 3c und/oder 3d und das jeweils zugehörige Soll-Kennzeichen 18a des nicht-automobilen Verkehrsteilnehmer 2 als Soll-Trainingsdaten 12 bereitgestellt. In dem Verfahrensschritt T2 wird das künstliche neuronale Netzwerk 13 mit den Soll-Trainingsdaten 12 vorwärtsgespeist. Das mit dem künstlichen neuronalen Netzwerk 13 ermittelte Ist-Kennzeichen 18b des nicht-automobilen Verkehrsteilnehmers 2 wird in dem Verfahrensschritt T3 erhalten. In dem Verfahrensschritt T4 wird das künstliche neuronale Netzwerk 13 mit dem Fehler 19 zwischen dem ermittelten Ist-Kennzeichen 18b und zugehörigem Soll-Kennzeichen 18a rückwärts gespeist, um die Gewichtungsfaktoren 14 im Verfahrensschritt T5 einzustellen.

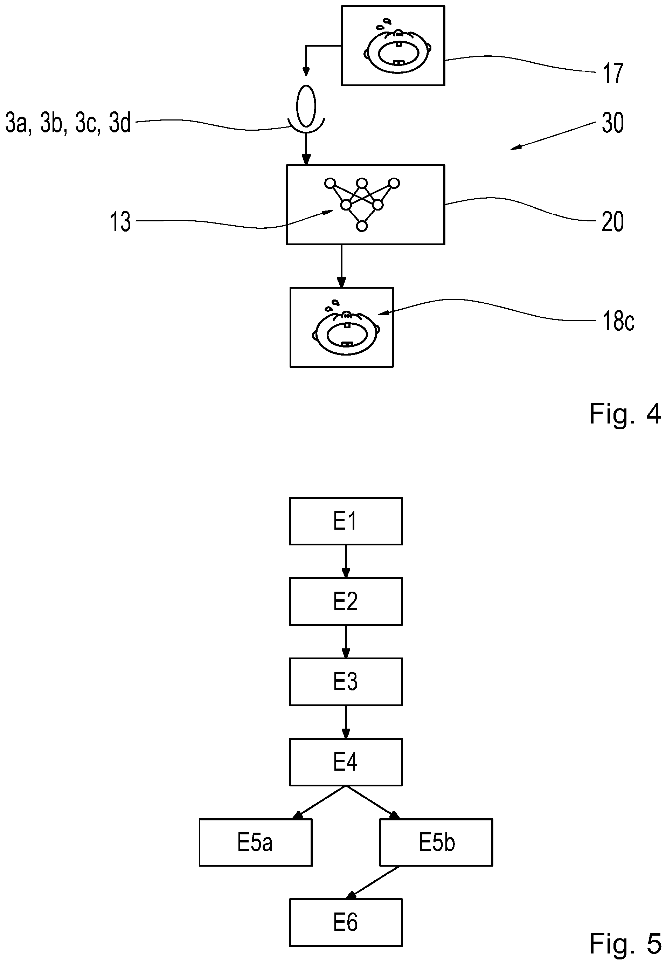

Fig. 4 zeigt ein Einsatzsystem 30, das als Fahrerassistenzsystem verwendbar ist. Das Einsatzsystem 30 weist als Bestandteile wenigstens ein Mikrofon 3a, 3b, 3c und/oder 3d und eine Auswerteeinrichtung 20 mit einem auf entsprechend auf Geräuscherkennung trainiertem künstlichen neuronalen Netzwerk 13 auf. Die Geräuschaufnahme 17 eines schreienden Kindes wird über das wenigstens eine Mikrofon 3a, 3b, 3c und/oder 3d in das trainierte künstliche neuronale Netzwerk 13 eingespeist. Dies entspricht dem in Fig. 5 gezeigtem Verfahrensschritt E1 des Einsatzverfahrens. Die Auswerteeinrichtung 20 führt das trainierte künstliche neuronale Netzwerk 13 aus. Dies entspricht dem Verfahrensschritt E2 in Fig. 5. Dabei wird das trainierte künstliche neuronale Netzwerk 13 mit der Geräuschaufnahme 17 vorwärts gespeist. Dies entspricht Verfahrensschritt E3 in Fig. 5. Als Ausgang erhält das trainierte künstliche neuronale Netzwerk 13 wenigstens ein Kennzeichen 18c des nicht-automobilen Verkehrsteilnehmers 2. Dies entspricht dem Verfahrensschritt E4 in Fig. 5. Das Kennzeichen 18c, das bei dem trainierten künstlichen neuronalen Netzwerk 13 dem entsprechenden Soll-Kennzeichen 18a entspricht, wird anschließend ausgegeben, z.B. über ein human machine interface. Dies entspricht dem Verfahrensschritt E5a. Alternativ oder zusätzlich zu der Ausgabe des Kennzeichens 18c wird anhand der Kennzeichen 18c, einer Position und/oder einer Bewegungsrichtung des nicht-automobilen Verkehrsteilnehmers 2 ein Fahrzeugsteuerungsbefehl 4 bestimmt, um einen drohenden Zusammenstoß mit dem nicht-automobilen Verkehrsteilnehmer 2 zu vermeiden. Dies entspricht dem Verfahrensschritt E5b in Fig. 5. dieser Fahrzeugsteuerungsbefehl 4 wird in dem Verfahrensschritt E6 an eine Fahrzeugregelungseinrichtung 5 ausgegeben für eine entsprechende Zusammenstoß freie Fahrt des Straßenfahrzeuges 1 durch entsprechende Längs- und Querregelung.

### Bezugszeichen

- 1: Straßenfahrzeug
- 2: nicht-automobiler Verkehrsteilnehmer
- 3a: Mikrofon
- 3b: Mikrofon
- 3c: Mikrofon
- 3d: Mikrofon
- 4: Fahrzeugsteuerungsbefehl
- 5: Fahrzeugregelungseinrichtung
- 7: Straßenecke
- 8: Fahrradklingel
- 10: Trainingssystem
- 11: Eingangsschnittstelle
- 12: Soll-Trainingsdaten
- 13: künstliches neuronales Netzwerk
- 14: Gewichtungsfaktor
- 15: Verbindung
- 16: Neuron
- 17: Geräuschaufnahme
- 18a: Soll-Kennzeichen
- 18b: Ist-Kennzeichen
- 18c: Kennzeichen
- 19: Fehler
- 20: Auswerteeinrichtung
- 21: Eingangsschnittstelle
- 22: Ausgangsschnittstelle
- 30: Fahrerassistenzsystem
- 40: Einsatzsystem
- T1-T5: Verfahrensschritte
- E1-E6: Verfahrensschritte

## Patentansprüche

1. Trainingssystem (10) für ein Straßenfahrzeug (1) zum Erfassen von nicht-automobilen Verkehrsteilnehmern (2) anhand von Geräuschen aufweisend
• eine Eingangsschnittstelle (11), um Soll-Trainingsdaten (12) zu erhalten,
• wobei die Soll-Trainingsdaten (12) während einer Fahrt des Straßenfahrzeuges (1) aufgenommene Geräuschaufnahmen (17) der nicht-automobilen Verkehrsteilnehmer (2) wenigstens eines an dem Straßenfahrzeug (1) anordenbaren Mikrofons (3a, 3b, 3c, 3d) und jeweils zugehörige Soll-Kennzeichen (18a) dieser nicht-automobilen Verkehrsteilnehmer (2) sind, und wobei
• das Trainingssystem (10) ausgeführt ist,
• ein künstliches neuronales Netzwerk (13) mit den Soll-Trainingsdaten (12) vorwärts zu speisen und in der Vorwärtsspeisung ein mit dem künstlichen neuronalen Netzwerk (13) ermitteltes Ist-Kennzeichen (18b) des jeweiligen nicht-automobilen Verkehrsteilnehmers (2) zu erhalten, und
• Gewichtungsfaktoren (14) für Verbindungen (15) von Neuronen (16) des künstlichen neuronalen Netzwerks (13) durch Rückwärtsspeisen des künstlichen neuronalen Netzwerks (13) mit dem Fehler (19) zwischen dem ermitteltem Ist-Kennzeichen (18b) und zugehörigem Soll-Kennzeichen (18a) zu erhalten.

2. Trainingsverfahren für ein künstliches neuronales Netzwerk (13) zum Erfassen von nicht-automobilen Verkehrsteilnehmern (2) anhand von Geräuschen mit den folgenden Verfahrensschritten:
• Bereitstellen von während einer Fahrt mit einem Straßenfahrzeug (1) aufgenommen Geräuschaufnahmen (17) der nicht-automobilen Verkehrsteilnehmer (2) wenigstens eines an dem Straßenfahrzeug (1) anordenbaren Mikrofons (3a, 3b, 3c, 3d) und jeweils zugehörige Soll-Kennzeichen der nicht-automobilen Verkehrsteilnehmer (2) als Soll-Trainingsdaten (12) (T1),
• Vorwärtsspeisen des künstlichen neuronalen Netzwerks (13) mit den Soll-Trainingsdaten (12) (T2),
• Erhalten eines mit dem künstlichen neuronalen Netzwerk (13) ermittelten Ist-Kennzeichens (18b) des jeweiligen nicht-automobilen Verkehrsteilnehmers (2) (T3),
• Rückwärtsspeisen des künstlichen neuronalen Netzwerks (13) mit dem Fehler (19) zwischen dem ermitteltem Ist-Kennzeichen (18b) und zugehörigem Soll-Kennzeichen (18a) (T4), und
• Erhalten von Gewichtungsfaktoren (14) für Verbindungen (15) von Neuronen (16) des künstlichen neuronalen Netzwerks (13) in einer Rückwärtsspeisung (T5).

3. Trainingsverfahren nach Anspruch 2, **dadurch gekennzeichnet, dass** die Soll-Trainingsdaten Geräuschaufnahmen von Fußgängern, Spielenden, vorzugsweise Kindern, Sportlern, vorzugsweise Fahrradfahrern, Inline-Skatern, Rollschuhfahrern und/oder Joggern, Rollern, Rollstuhlfahrern, Haustieren, vorzugsweise Hunde, und/oder Stalltieren, vorzugsweise Pferde, sind.

4. Auswerteeinrichtung (20) für ein Straßenfahrzeug (1) zum Erfassen von nicht-automobilen Verkehrsteilnehmern (2) anhand von Geräuschen aufweisend
• eine Eingangsschnittstelle (21), um die Geräusche der nicht-automobilen Verkehrsteilnehmer (2) zu erhalten,
• wobei die Auswerteeinrichtung (20) ausgeführt ist, ein trainiertes künstliches neuronales Netzwerk (13) mit diesen Geräuschen vorwärts zu speisen,
• wobei das künstliche neuronale Netzwerk (13) trainiert ist, anhand der Geräusche Kennzeichen der nicht-automobilen Verkehrsteilnehmer (2) zu erhalten, und
• eine Ausgangsschnittstelle (22), um die Kennzeichen der nicht-automobilen Verkehrsteilnehmer (2) auszugeben.

5. Auswerteeinrichtung (20) nach Anspruch 4, **dadurch gekennzeichnet, dass** das künstliche neuronale Netzwerk (13) ein gemäß dem Trainingsverfahren nach Anspruch 2 oder 3 trainiertes künstliches neuronales Netzwerk (13) ist.

6. Auswerteeinrichtung (20) nach Anspruch 4 oder 5, **dadurch gekennzeichnet, dass** das künstliche neuronale Netzwerk (13) trainiert ist, anhand der Geräusche Positionen und/oder Bewegungsrichtungen der nicht-automobilen Verkehrsteilnehmer (2) relativ zu der Auswerteeinrichtung (20) zu erhalten.

7. Auswerteeinrichtung (20) nach einem der Ansprüche 4 bis 6, **dadurch gekennzeichnet, dass**
• das künstliche neuronale Netzwerk (13) trainiert ist, anhand der Kennzeichen, Position und/oder Bewegungsrichtung des nicht-automobilen Verkehrsteilnehmers (2) einen Fahrzeugsteuerungsbefehl (4) zu bestimmen, um einen drohenden Zusammenstoß mit zumindest einem der nicht-automobilen Verkehrsteilnehmern (2) zu vermeiden, und
• die Ausgangsschnittstelle (22) ausgeführt ist, diesen Fahrzeugsteuerungsbefehl (4) an eine Fahrzeugregelungseinrichtung (5) auszugeben.

8. Einsatzsystem (30) für ein Straßenfahrzeug (1) zum Erfassen von nicht-automobilen Verkehrsteilnehmern (2) anhand von Geräuschen aufweisend
• wenigstens ein an dem Straßenfahrzeug (1) anordenbares Mikrofon (3a, 3b, 3c, 3d), um während einer Fahrt mit dem Straßenfahrzeug (1) Geräuschaufnahmen (17) der nicht-automobilen Verkehrsteilnehmer (2) zu erhalten, und
• eine in das Straßenfahrzeug (1) integrierbare Auswerteeinrichtung (20), wobei die Auswerteeinrichtung (20) ausgeführt ist,
• als Eingang die Geräuschaufnahmen (17) des Mikrofons (3a, 3b, 3c, 3d) zu erhalten,
• ein trainiertes künstliches neuronales Netzwerk (13) mit diesen Geräuschen vorwärts zu speisen, wobei das künstliche neuronale Netzwerk (13) trainiert ist, anhand der Geräusche wenigstens ein Kennzeichen (18c) der nicht-automobilen Verkehrsteilnehmer (2) zu erhalten, und
• als Ausgang das wenigstens eine Kennzeichen (18c) der nicht-automobilen Verkehrsteilnehmer (2) bereitzustellen.

9. Einsatzsystem (30) nach Anspruch 8, **dadurch gekennzeichnet, dass** die Auswerteeinrichtung (20) eine Auswerteeinrichtung (20) nach einem der Ansprüche 4 bis 7 ist.

10. Verwendung eines Einsatzsystems (30) nach Anspruch 8 oder 9 als ein Fahrerassistenzsystem.

11. Einsatzverfahren zum Erfassen von nicht-automobilen Verkehrsteilnehmern (2) anhand von Geräuschen mit den folgenden Verfahrensschritten:
• Erhalten der Geräusche der nicht-automobilen Verkehrsteilnehmer (2) (E1),
• Ausführen eines trainierten künstlichen neuronalen Netzwerks (13) (E2),
• wobei das trainierte künstliche neuronale Netzwerk (13) mit diesen Geräuschen vorwärts gespeist wird (E3) und
• als Ausgang wenigstens ein Kennzeichen (18c) der nicht-automobilen Verkehrsteilnehmer (2) erhält (E4),
und
• Ausgeben des wenigstens einen Kennzeichens (18c) der nicht-automobilen Verkehrsteilnehmer (2) (E5a).

12. Einsatzverfahren nach Anspruch 11, **dadurch gekennzeichnet, dass** zur Durchführung des Einsatzverfahrens eine Auswerteeinrichtung (20) nach einem der Ansprüche 4 bis 7 oder ein Einsatzsystem (30) nach Anspruch 8 oder 9 verwendet wird.

13. Einsatzverfahren nach Anspruch 11 oder 12, **dadurch gekennzeichnet, dass**
• anhand der Kennzeichen, einer Position und/oder einer Bewegungsrichtung des nicht-automobilen Verkehrsteilnehmers (2) ein Fahrzeugsteuerungsbefehl (4) bestimmt wird (E5b), um einen drohenden Zusammenstoß mit zumindest einem der nicht-automobilen Verkehrsteilnehmer (2) zu vermeiden, und
• dieser Fahrzeugsteuerungsbefehl (4) an eine Fahrzeugregelungseinrichtung (5) ausgegeben wird (E6).
